# EUROPEAN PATENT APPLICATION

(11) **EP 4 365 651 A1**
(43) Date of publication of application: **08.05.2024**
(21) Application number: 22204912.4
(22) Date of filing: 01.11.2022
(51) Int. Cl.: G02B 6/293, G02B 5/28

(54) **METHOD FOR THE MANUFACTURE OF AN ETALON AND FIBER-BASED ETALON**

(71) Applicant: Leibniz-Institut für Astrophysik Potsdam (AIP), 14482 Potsdam, Brandenburg (DE)
(72) Inventor: Günther, Alan, 14059 Berlin (DE); Madhav, Kalaga, 14473 Berlin (DE); Dinkelaker, Aline, 10781 Berlin (DE)
(74) Representative: Heinemeyer, Karsten

(57) **Abstract**

The invention relates to a method for the manufacture of an etalon (1) and an etalon (1). The etalon (1) comprises a glass substrate (2) with a light waveguide (2) integrated therein, and at least two parts of optical fibers (6, 7) each of said at least parts of optical fibers (6, 7) with one end (8, 9) being optically coupled to the light waveguide (3) on opposite sides of the light waveguide (3), wherein between the light waveguide (3) and the ends (8, 9) being optically coupled to the light waveguide (3) at least one mirror element (10) is arranged for at least partly reflecting light propagating through the light waveguide (3).

## Description

The present invention relates to a method for the manufacture of an etalon and a fiber-based etalon comprising a bridge-element for optically coupling the ends of two optical fibers. According to the invention an etalon is provided, which can be produced in a comparatively simple and inexpensive way and is suitable for an integration into optical fiber systems.

In optics, a Fabry-Perot interferometer (FPI) or etalon is an optical cavity made from two parallel reflecting surfaces, e.g. thin mirror coatings. Optical waves can pass through the optical cavity only when they are in resonance with it. Fabry-Perot interferometers (FPI) or etalons are widely used in telecommunications, lasers and spectroscopy to control and measure the wavelengths of light. Recent advances in fabrication technique allow the creation of very precise tunable Fabry-Perot interferometers. The device is technically an interferometer when the distance between the two surfaces -and thus the resonance length- can be changed, and an etalon when the distance is fixed.

Classic tunable Fabry-Perot interferometers and etalons are used in many areas of optics. For example, they serve as high-precision filters in laser applications or as elements to provide reference radiation with specific wavelengths in spectroscopy. Although they can be used very versatile, so far it is hardly possible to produce fiber-based etalons in a simple and inexpensive way. There are techniques for the fabrication of fiber-based etalons, such as the use of microlenses made of epoxy drops on mirrored fiber ends, the use of short fiber pieces as bridge waveguides, or highly complex processing of the fiber ends into concave mirrors. However, these can only be used for a certain wavelength range, have a low finesse, an insufficient free spectral range for certain applications or are too expensive to manufacture.

The problem with the production of fiber-coupled Fabry-Perot Interferometers, respectively etalons, is that a stable resonator must be created between two fiber ends in such a way that light is at least partly reflected from fiber end to fiber end as often as possible. However, when light exits an open fiber end, it diverges. As a result, only a small part of the light is transferred to the end of the opposite fiber, or light is reflected back into the initial fiber.

Nevertheless, different techniques to create fiber-based resonators are known. According to a first technical solution the ends of fibers are shaped into concave mirrors, which are coated with a dielectric reflective material. This method is very complex, but offers very good results in terms of finesse and transmission. Another possibility is to integrate microlenses into the resonator so that
both fiber ends form a confocal resonator. This technical solution is described for example in CN103176242 (A). Here, the microlenses are either glued directly on mirrored fiber ends or otherwise fixed between two fiber ends. Furthermore, the creation of microlenses from a drop of UV-curable adhesive on fiber ends has already been shown. Although the solutions mentioned before reduce beam expansion in the resonator, they do involve some disadvantages. The positioning and stabilization of microlenses is very complex and requires a lot of skill, whereas molding of lenses from adhesives is a comparative inexpensive production process. However, reflection losses occur on the surfaces of the lenses, which in turn can reduce the transmission and thus the finesse.

Another technical solution is based on the fact that an ideal fiber-based etalon should have a single-mode waveguide between two fiber ends to keep the resonator stable. Here, the process of manufacturing a small piece of fiber is mechanically possible only to a limited extent since the handling of such small pieces becomes very time consuming and the insertion of a short piece of a single-mode fiber end is mechanically only possible down to a certain length, which is sometimes not short enough to form the required resonator.

Another possibility to form a fiber-based etalon is micromachining of fiber ends by means of laser bombardment and mirror coating. Here, CO₂-lasers are used to process the surface of the fiber ends so that they form a concave profile, which is then coated with a reflective layer. In this way one obtains a concave mirror resonator with high quality. Nevertheless, this production process is expensive and the coating of curved fiber ends with sufficient reflective material is time-consuming.

Furthermore, when designing Fabry-Perot interferometers or etalons, it should be noted that for many applications, e.g. for the detection of differences in refractive indices, low transmission is not important for the intended use of an etalon. For example, when Fabry-Perot interferometers are used to detect refractive index differences, detecting a signal difference is often sufficient.

Based on the technical solutions for fiber-based etalons known from the prior art the invention is directed to the problem of how to overcome some or all of the existing problems. One objective of the invention is to provide a method to fabricate a fiber-based etalon in a simpler and less expensive way. The fabrication process including a necessary handling of components shall be limited to as few as possible and comparatively easy process steps. Especially time-consuming processes and/or process steps should be avoided. Furthermore, the fabrication process to be specified should be executable using well known means and technologies, and an etalon should be provided, which can be used for different applications, especially for optics as well as telecommunication or medical applications or in future quantum memory applications. Moreover, reflection of light at opposite ends of optical fibers should be improved as to provide a very specific etalon and/or optical cavity which is suitable for integration into optical fiber-systems.

The objectives mentioned above are met by a method according to claim 1 as well as with the etalon according to claim 10. Furthermore, claim 13 relates to a specific resonator and claim 14 to a specific use of the etalon according to the invention.

The invention relates to a method for the manufacture of an etalon comprising the steps of
- providing a glass substrate and laser writing a light waveguide into said substrate such that the light waveguide extends between two surface areas of the glass substrate, and
- providing two optical fibers, connecting one end of each of said optical fibers with each one of the surface areas, and arranging a mirror element between the ends of the optical fibres and the surface areas of the glass substrates such that light propagating through the light waveguide is at least partly reflected by the mirror element.

The invention is based on the idea, that a glass substrate forming a bridge element is arranged between two ends of optical fibers, and that a waveguide is laser-written into the glass substrate in such a way, that it extends between two surface areas of the glass substrate, wherein the surface areas are each optically as well as mechanically connected to one end of the two optical fibers.

Moreover, mirror elements, e.g. reflective coatings, are arranged between each surface area and one of the optical fibers as to make sure that light propagating through the optical waveguide is at least partly reflected by the mirror elements back into the optical waveguide. Thus, the mirror elements are located at opposite ends of the optical waveguide which was laser-written into a glass substrate. Therefore, light is propagating through the laser-written optical waveguide several times in opposite directions so that an optical filter that transmits only light of specific wavelengths is provided.

According to a first embodiment of the invention the mirror elements are produced by coating the ends of the optical fibers, e.g. by vapor deposition of several layers (thickness: *λ*/4 ) of dielectric material with different refractive index. Preferably, the ends of the optical fibers are coated or covered with a specific material for matching the refractive index, especially a dielectric refractive material before the ends of the optical fibers are connected to the surface areas of the glass substrate through which the light waveguide extends.

Preferably, fibers, typically single mode fibers, with a core diameter of 2 to 10 µm and cladding diameters of 125 to 250 µm are used.

Regarding the glass substrate it is advantageous that a glass plate is used. According to a preferred embodiment the smallest thickness of the glass substrate chosen is 100 µm. Furthermore, the maximum glass thicknesses used depends on the microscope objective used and of the travel range of stages in this direction. A favoured travel distance (X-Y-Z direction) is 100mm x 160mm x 4.8 mm, but depending on the laser which is used smaller distances can be realized. Accordingly, the length of the light waveguide then depends on the thickness of the glass substrate, typically a glass plate, used.

Moreover, although in principle the glass substrates used can be made of all common types of glass, usually soda-lime glass, Borosilicate glass, aluminium silica glass, silica glass or willow glass is used.

In a further advantageous embodiment at least one mirror element comprises a dielectric material, which is part of a material group containing tantalum oxide (Ta₂O₅), aluminium oxide (Al₂O₃) or hafnium oxide (HfO₂) or materials with similar properties.

In a further embodiment of the invention the light waveguide is written into the glass substrate with a femtosecond laser. Here, a femtosecond laser is used to write a light waveguide into the glass substrate that serves as an optical bridge between two optical fibers wherein the light waveguide extends between two mirror elements, especially two mirrored fiber ends or two mirrored surface areas of the glass substrate. Particularly, during the writing process the laser beam is inclined, e.g. by at least approximately 90°, to the extension direction of the light waveguide but it is also conceivable that the laser beam is oriented in longitudinal direction of the waveguide to be written. According to a preferred embodiment of the invention, a femtosecond pulse laser system made by MKS Spectra-Physics with two selectable wavelengths of 1040 and 520 nm, and pulse energies of 40 µJ at a pulse repetition rate of 500 kHz is used.

Due to the use of a femtosecond laser, it is possible to create a waveguide between two surfaces of a glass plate suitable in a special way. Particularly, such a light waveguide not only effectively guide light, but also ensures, that light entering the waveguide does not diverge. Thus, an optical bridge formed by said light waveguide, which is arranged within a glass substrate, prevents the incoming light beam from widening. In this way, it is possible to create an optical bridge between the ends of optical fibers serving as an optical cavity and enabling a comparatively easy, time-saving, and inexpensive way to produce a fiber-based etalon.

According to a preferred process of manufacture, a pulsed femtosecond laser is first focused on the end facet of a thin glass plate using a fixed microscope objective. With the laser running and the parameters optimized, the distance between the glass plate and the microscope objective is increased or decreased continuously or with microsteps. This creates a refractive index excursion in the focus of the laser within the material due to thermal changes of the glass structure. The, preferably continuos, movement of the laser through the glass substrate thus creates a continuous but laterally sharply defined region with a higher refractive index than in the surrounding material, which can be used as a waveguide. The lateral expansion of this area depends, among other things, on the laser power used and the focal expansion of the laser in the material.

Furthermore, it is conceivable, that after the generation of the continuous waveguide, a possible post-processing, especially polishing, of the surface of the glass substrate is realized in order to compensate surface unevenness at the waveguide-to-air transition point.

Moreover, advantageously subsequent to the post-processing described above, the glass substrate is preferably coated with a highly reflective dielectric layer, usually comprising many λ/4-layers on both sides of the waveguide. This coating is usually done by sputtering or by chemical or physical vapor deposition processes. According to an alternative embodiment, the light waveguide is laser written into a glass substrate with already coated surfaces. Then, the laser wavelength used must be outside the reflective wavelength range of the reflective coating and the end of the writing process needs to be close to the beginning of the reflective dielectric coating.

In case the surfaces of the glass plate are mirrored, it is possible to directly attach the ends of two optical fibers to the surface areas on opposite sides of the light waveguide. Light leaving one end of a fiber is transmitted into the light waveguide of the glass substrates, propagates nearly lossless through the waveguide, and is at least partly reflected at the mirror elements arranged at both ends of the light waveguide.

According to a further embodiment of the invention, at first the ends of the optical fibers to be connected to the surface areas of the glass substrate, and thus at least indirectly with light waveguide, are coated with a dielectric reflective material and then glued or welded with the help of a CO₂-laser onto the surface areas of the glass substrate.

Preferably, the two surface areas of the glass substrate between which the light waveguide are arranged at least almost in parallel. According to this technical solution both surface areas of the glass substrate being suitable to optically couple the ends of two different fibers to the glass substrate are arranged on plane surfaces located on opposite sides of the glass substrate, e.g. a glass plate. In this context, it is conceivable that in a first step at least two light waveguides are laser-written into a glass substrate in such a way that they are arranged side by side, and then in a second step said at least two light waveguides are separated, for example by cutting or breaking the glass substrate between the light waveguides.

In a further preferred embodiment of the invention the ends of the optical fibers are glued with an adhesive onto the surface areas of the glass substrate. Advantageously, the adhesive is irradiated and hardened with the help of UV-light. Preferably, an adhesive is used, whose refractive index is at least similar to the refractive index of the glass substrate and/or the fiber. This adhesive is chosen depending on the properties of the light which should pass the connection between the end of an optical fibre and the surface area of the glass substrate with the light waveguide, especially on the wavelength of the light and/or the part of the light that should be filtered.

Furthermore, it is preferred that the light waveguide which is laser-written into the glass substrate has a length of 10 µm to 10 mm, preferably of 100 µm to 2 mm. Again, the length of the light waveguide serving as an optical bridge between two ends of optical fibers is chosen depending on the light propagating through the light waveguide of the glass substrate and/or that should be transmitted from one to another optical fiber.

In principle, there are several different possible solutions to make an etalon according to the invention. According to one specific technical solution, a light waveguide is laser-written into a glass substrate, e.g. a glass plate or platelet, from one surface area to another surface area. Subsequently, the surface areas of the glass substrate located at the opposite ends of the light waveguide are coated with a dielectric refractive material and then connected, advantageously glued, to the ends of two optical fibers.

Furthermore, it is conceivable that first the light waveguide is laser-written into a glass substrate and then the surface areas restricting the light waveguide on both sides are optically coupled to already mirrored fiber ends. Here, the ends of optical fibers are already coated with a reflective material and form mirror elements when connected to the surface areas of the glass substrate between which the light waveguide extends.

Taking the aforementioned into account, it is quite conceivable that an etalon is manufactured or revised using the steps of providing an etalon and writing a waveguide into at least one component of said etalon with the help of a femtosecond laser. Here, preferably a waveguide is written by means of a femtosecond laser from

According to this embodiment of the invention, it is conceivable that a waveguide structure forming an optical bridge between the ends of two optical fibers is laser-written into an already existing etalon. Preferably, the waveguide is laser written from one side of a glass element coated with a reflective layer to the opposite side also coated with a refractive layer in such a way that said light waveguide is arranged between the refractive layers and light propagating through the light waveguide is at least partly reflected by the reflective layers. Again, the mirrored surface areas are connected or connectable to ends of optical fibers for guiding light to and/or away from the light waveguide.

The invention also relates to an etalon comprising a glass substrate with a light waveguide integrated therein and with at least one part of an optical fiber being optically coupled to one side of the light waveguide. Between the light waveguide and said end of a fiber piece being optically coupled to the waveguide a I mirror element is arranged, which at least partly reflect light propagating through the light waveguide. Of course, it is conceivable, that at least two fiber pieces are connected to opposite ends of the light waveguide.

In the simplest case, an etalon according to the invention comprises a glass plate with a highly reflective layer on both sides for a specific wavelength range. It is advantageous that a light waveguide is written into this glass plate, between the two highly reflective dielectric layers, using a femtosecond laser writing process. Since the dielectric layer is wavelength dependent, a laser can also be used to write waveguides in coated glass plates, if an appropriate wavelength is used.

According to the invention an etalon is provided comprising a bridge element made by laser-writing a light waveguide into a glass substrate, wherein preferably a femtosecond laser is used. Here, a fiber-based etalon with an optic bridge between two fiber ends is realized at which light propagating through the laser-written waveguide, is reflected at least partly at the ends of the light waveguides by mirror elements, which for example comprise layer of a dielectric reflective material, so that light is guided through the waveguide alternately in opposite directions, wherein only a small, well-defined part of the light coupled into the waveguide exits it again. Thus, the fiber ends coupled by an optic bridge element serve as an optical filter. The main advantage of this kind of optical bridge is that due to the invention light exiting one fiber end does not diverge but is propagating the waveguide in longitudinal direction. Hence, the light beam is not widened when light exits the incoming optical fiber.

Again, it is conceivable that the mirror elements comprise specific coatings of dielectric refractive material, which reflects light of certain wavelength or of a certain wavelength range so that only light of a discrete wavelength passes the fiber-based etalon. With the help of the invention very compact etalons can be fabricated. Furthermore, these etalons do not require adjustment and can be easily used plug-and-play as well as integrated into an optical fiber system. On the other hand, according to a specific embodiment of the invention a temperature control is provided to realize an adjustment of the transmitted wavelength. Etalons according to the invention are suitable as filter for many applications, e.g. for quantum storage systems, where they are used to filter out single photons.

By realizing the invention low-cost etalons are producible that can be used in a variety of optical applications, e.g. as narrowband filters, in thickness- or refractive-index sensors and/or to generate optical frequency references. The advantage of such an etalon is the possibility to be integrated into already existing fiber optic setups in a comparatively easy way.

According to another embodiment of the invention the ends of the optical fibers are bonded to surface areas of the glass substrate using a light curable adhesive.

In addition, the invention relates to a specific resonator which can be preferably integrated into optical fiber systems. The resonator can serve as an optical bridge element between the ends of two optical fibers and comprises a glass substrate with a light waveguide extending through the substrate between two surface areas of the glass substrate, wherein the surface areas of the glass substrate are suitable for optically coupling ends of optical fibers and are coated with a dielectric refractive material. The light waveguide arranged within the glass substrate is made by laser-writing. Light propagating through the light waveguide is at least partly reflected in the area of the ends of said light waveguide by the reflective material.

A further invention relates to a device for telecommunication, laser technology, medical applications and/or spectroscopy using at least one etalon and/or resonator according to at least one embodiment described above. Here, a device for telecommunication, laser technology, medical applications and/or spectroscopy comprises an etalon and/or a resonator with a glass substrate and a laser-written light waveguide therein. The light waveguide extends between two surface areas of the glass substrate, wherein ends of optical fibers are coupled to each of the surface areas and mirror elements are arranged between the ends of the fibers and the waveguide as to on both ends of the light waveguide light propagating through the light waveguide is at least partly reflected by the mirror elements. According to a preferred embodiment the waveguide is laser-written into the glass substrate using a femtosecond laser. According to another embodiment of the invention, a continuous wave UV-laser is used to inscribe a waveguide into a glass substrate comprising Ge-doped glass.

Preferably, the light waveguide of the bridge element is arranged between layers of dielectric reflective material.

According to a specific embodiment of the invention ends of the fibers, which are already coated with a dielectric refractive material are glued onto respective surface areas of the glass substrate. Here, it is possible that the light waveguide has already been laser-written into the glass substrate when the optical fibers are connected to the surface areas of the glass substrate, or the light waveguide is laser-written into the glass substrate and then the ends of two optical fibers are connected to the surface areas on opposite sides of the glass substrate. Alternatively, first the light waveguide is inserted into a glass substrate by laser writing, and then the surface areas for coupling optical fibers are coated with a dielectric refractive material. The advantage of the method described before is that the position of the optical fibers relative to the light waveguide can be better controlled than with the option using already coated fibers. Furthermore, it is possible that the two surface areas, which have already been coated once, are then polished and/or coated with another dielectric refractive material.

In a preferred embodiment for bonding the ends of optical fibers to the surface areas an UV-light curable adhesive is used to connect the ends of the fibers to the respective surface areas of the glass substrate.

An etalon according to the invention is preferably used for medical engineering, telecommunication, physical, astrophysical and/or measurement technique applications. A very preferred application is the generation of bridge waveguide Fabry-Perot interferometers, respectively etalons as filters for rubidium- and cesium-based quantum memories. The relevant D1 transitions here require components operating at 795 nm (85Rb and 87Rb) and 894.6 nm (133Cs), respectively. In this particular case, the fiber based Fabry-Perot interferometers, respectively etalons are used to create the optically sharp edge necessary to separate the signal and control laser light that occur in these processes. These frequencies differ from each other only by the hyperfine splitting of the ground state (6.8 GHz for 87Rb, 3.0 GHz for 85Rb, and 9.2 GHz for 133Cs).

Further features properties and advantages of the present invention will become clear from the following figures. The embodiments do not limit the scope of the present invention which is determined by the independent claims. Identical components shown in different figures are marked with the same references.
- Fig. 1:: Schematic representation of a method for the manufacture of an etalon according to a first embodiment of the invention having two alternatives;
- Fig. 2:: schematic representation of a method for the manufacture of an etalon according to a second embodiment of the invention,
- Fig. 3:: fiber-based etalon according to the invention and
- Fig. 4:: scheme of a laser writing process.

The invention relates to a method for the manufacture of a fiber-based etalon 1 as well as to a fiber-based etalon 1. The main idea of the invention is to provide an optical bridge between two optical fibers 6, 7 which prevents the widening of a light beam exiting the incoming optical fiber 6. The optical bridge comprises a glass substrate 2 with a light waveguide 3 inserted therein by laser 12 writing, and mirror elements 10 located between the light waveguide 3 and the ends 8, 9 of two optical fibers 6, 7 connected on both sides of the light waveguide 3 to suitable surface areas 4, 5 of the glass substrate 2.

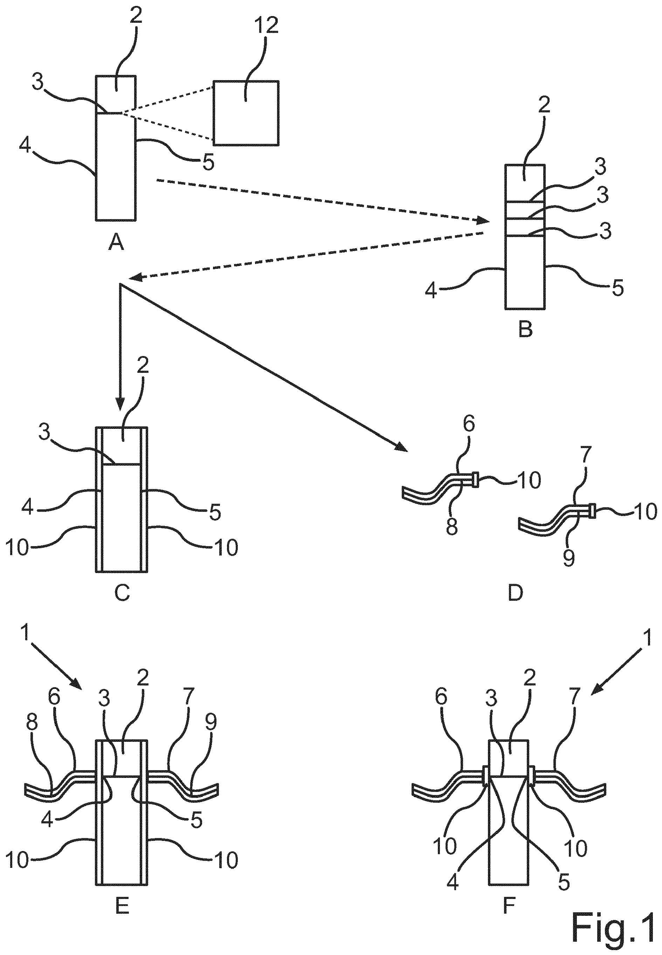

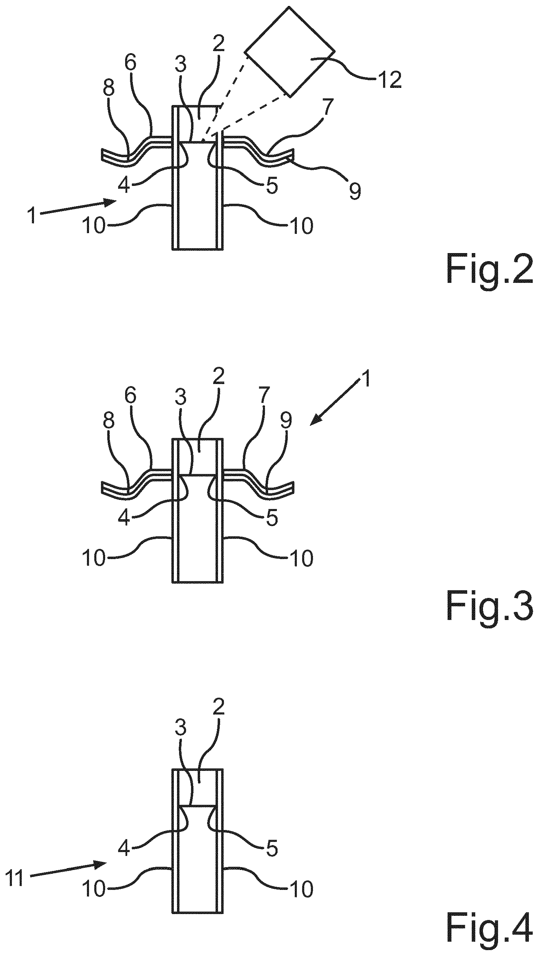

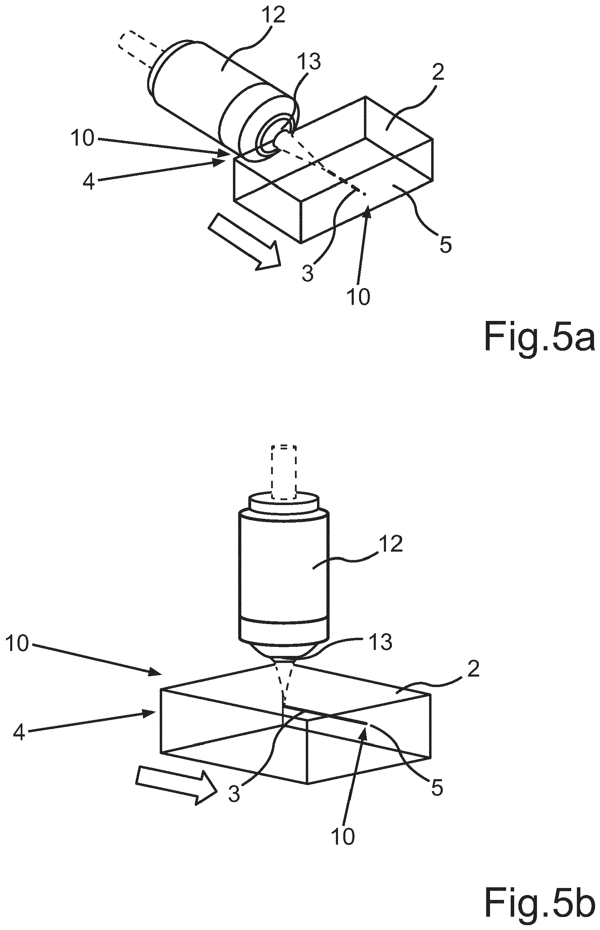

Fig. 1 shows steps of a method for the manufacture of an etalon 1 according to a first embodiment of the invention. In step "A" a glass substrate 2 is provided and a light waveguide 3 extending from one surface area 4 to another surface area 5 is written into the glass substrate 2 by a laser 12 according to the embodiment described by a femtosecond laser. The process of writing a light waveguide 3 into a glass substrate 2 is shown in fig. 4.

After finishing the writing process the light waveguide 3 extends from one surface area 4 to another surface area 5 of the glass substrate, wherein according to the embodiment shown in fig.1 the surface areas 4, 5 are located on opposite surfaces of the glass substrate 2 and aligned in parallel. Here, the laser beam is aligned inclined to the longitudinal direction of the light waveguide 3 to be written into the glass substrate 2.

In a second step "B" optionally more than one, here three light waveguides 3 can be laser written in parallel into one glass substrate 2 to produce several etalons 1. Preferably, the glass substrate 2 is then separated between the individual light waveguides 3.

After insertion of at least one light waveguide 3 into a glass substrate, and when more than one light waveguide 3 are generated preferably before the glass substrate 2 is separated, in method step "C" the surface areas 4, 5 of the substrate are covered with a mirror element 10, here in the form of several layers having a thickness of a half wave path lengtht comprising a dielectric reflective material and coated on the surface areas 4, 5. Alternately, in a method step "D" the mirror element 10, preferably a dielectric refractive layer is applied on the ends 8, 9 of optical fibers 6, 7. According to the preferred embodiment shown in fig. 1 the optical fibers 6, 7 are single-mode fibers.

Next either in step "E" one end of each optical fiber 6, 7 is glued onto the surface areas 4, 5 already coated with a mirror element 10 in form of a dielectric reflective layer or in step "F" ends 8, 9 of the optical fibers 6, 7 which have been coated with a dielectric reflective layer being the mirror element 10 are glued onto uncoated surface areas 4, 5. Furthermore, it is possible to polish or otherwise mechanically and/or electrochemically process the surface areas 4, 5 before coated with a reflective material or bonded to ends 8, 9 of optical fibers 6, 7 already coated with a reflective layer.

Fig. 2 shows schematic representation of a method for the manufacture of an etalon 1 according to a second embodiment of the invention. Here, a light waveguide 3 which should serve as an optical bridge is inserted into a Fabry-Perot etalon 1. Again, the light waveguide 3 is written by a laser 12, preferably a femtosecond laser into an optical element, e.g. a glass platelet, wherein the light waveguide 3 is written between dielectric reflection layers forming suitable mirror elements 10.

Fig. 3 shows a fiber-based etalon 1 according to the invention. The etalon 1 comprises a glass substrate 2 with a light waveguide 3 integrated therein, two single-mode optical fibers 6, 7 respectively parts of two single-mode optical fibers 6, 7, wherein ends of these optical fibers 6, 7 are bonded to surface areas 4, 5 of the glass substrate 2, and two mirror elements 10 arranged on both ends of the light waveguide 3 between the light waveguide 3 and the ends 8, 9 of the optical fibers 6, 7. Light exiting the incoming fiber 6 propagates through the light waveguide 3 and is reflected at least partly by the mirror elements 10 being layers of a dielectric reflective material. The Light propagating through the light waveguide 3 is reflected by the mirror elements 10 in such a way that said light propagates several times in opposite direction through the light waveguide 3 and only a part of the incoming light is transferred into the outgoing optical fiber 7. Due to the design of the etalon 1 the beam of the light exiting the incoming fiber 6 is not widened and thus a very effective light transmission can be realized. The fiber-based etalon 1 shown in fig. 3 serves as an optical filter, which allows an effective transmission of light although it is producible comparatively easy and inexpensive.

The process of writing a light waveguide 3 into a glass substrate 2 is shown in fig. 4. According to the embodiment shown in fig. 4 a femtosecond laser 12 is used. Fig. 4 a) shows a writing process through the depth of the glass substrate 2, along the laser beam, while fig. 4 b) shows a writing process perpendicular to the laser beam direction.

In each case, a pulsed femtosecond laser 12 is first focused on the end facet of a glass substrate 2, here a thin glass plate using a fixed microscope objective 13. With the laser 12 running and the parameters optimized, the distance between the glass plate 2 and the microscope objective 13 is increased or decreased continuously or with microsteps. This creates a refractive index excursion in the focus of the laser 12 within the material due to thermal changes of the glass structure. The, preferably continuous, movement of the laser 12 through the glass plate 2 thus creates a continuous but laterally sharply defined region with a higher refractive index than in the surrounding material, which can be used as a light waveguide 3. The lateral expansion of this area depends, among other things, on the laser power used and the focal expansion of the laser 12 in the glass material. After the generation of the continuous light waveguide 3, a possible post-processing, especially polishing, of the surface of the glass substrate 2 is useful in order to compensate surface unevenness at the waveguide-to-air transition point. Subsequently, the glass substrate 2 on its surfaces 4, 5 is coated with a highly reflective dielectric layer, so that each mirror element 10 comprises many λ/4-layers located on both sides of the glass substrate 2. This coating is usually done by sputtering or by chemical or physical vapor deposition processes.

When using already coated surfaces 4, 5, the laser wavelength used must be outside the reflective wavelength range of the reflective coating and the end of the writing process needs to be close to the beginning of the reflective dielectric coating.

### List of reference numbers

- 1: etalon
- 2: glass substrate
- 3: light waveguide
- 4: surface area
- 5: surface area
- 6: optical fiber
- 7: optical fiber
- 8: end of optical fiber
- 9: end of optical fiber
- 10: mirror element
- 11: resonator
- 12: laser
- 13: microscope objective

## Claims

1. Method for the manufacture of an etalon (1) comprising the steps of:
- providing a glass substrate (2) and laser writing a light waveguide (3) into the glass substrate (2) such that the light waveguide (3) extends between two surface areas (4, 5) of the glass substrate (2), and
- providing two optical fibers (6, 7), connecting one end (8, 9) of each of said optical fibers (6, 7) with each one of the surface areas (4, 5), and arranging a mirror element (10) between the ends (8, 9) of the optical fibres (6, 7) and the surface areas (4, 5) of the glass substrate (2) such that light propagating through the light waveguide (3) is at least partly reflected by the mirror elements (10).

2. Method according to claim 1,
**characterised in that** the mirror elements (10, are produced by coating the ends (8, 9) of the optical fibers (6, 7) and/or the surface areas (4, 5) of the glass substrate (2) with a dielectric refractive material.

3. Method according to claim 1 or 2,
**characterised in that** the light waveguide (3) is written into the glass substrate (2) using a femtosecond laser.

4. Method according to at least one of the precedent claims,
**characterised in that** the two surface areas (4, 5) are arranged in parallel.

5. Method according to at least one of the precedent claims,
**characterised in that** at least two light waveguides (3) are written into the glass substrate (2) in parallel and the glass substrate (2) is separated between the at least two light waveguides (3).

6. Method according to at least one of the preceding claims,
**characterised in that** the ends (8, 9) of the optical fibers (6, 7) are glued with an adhesive onto the surface areas (4, 5) of the glass substrate (2).

7. Method according to claim 6,
**characterised in that** the adhesive is irradiated and cured with UV-light and/or by heating.

8. Method according to at least one of the precedent claims,
**characterised in that** the light waveguide (3) is laser-written into the glass substrate (2) that said light waveguide (3) has a length between 10 µm and 10 mm.

9. Method for the manufacture or the revision of an etalon (1) comprising the Steps of:
- providing an etalon (1) and writing a light waveguide (3) into at least one component of said etalon (1) using a femtosecond laser.

10. Etalon (1) comprising a glass substrate (2) with a light waveguide (2) integrated therein, and at least two parts of optical fibers (6, 7) each of said at least parts of optical fibers (6, 7) with one end (8, 9) being optically coupled to the light waveguide (3) on opposite sides of the light waveguide (3), wherein between the light waveguide (3) and the ends (8, 9) being optically coupled to the light waveguide (3) at least one mirror element (10) is arranged for at least partly reflecting light propagating through the light waveguide (3).

11. Etalon according to claim 11,
**characterised in that** the mirror element (10) comprises a dielectric refractive material being coated on the ends (8, 9) of the optical fibers (6, 7) and/or at least on the surface areas (4, 5) of the glass substrate (2).

12. Etalon according to claim 11 or 12,
**characterised in that** the ends (8, 9) of the optical fibres (6, 7) are bonded to surface areas (4, 5) of the glass substrate (2) by an adhesive, preferably an UV-light curable adhesive.

13. Resonator (11) for an Etalon (1) comprising at least one glass substrate (2) with a laser-written light waveguide (3) extending between two surface areas (4, 5) of said glass substrate (2), wherein the surface areas (4, 5) of the glass substrate (2) are suitable for optically coupling optical fibers (6, 7) to both ends of the light waveguide (3) in such a way, that light propagating through the light waveguide (3) is at least partly reflected in the connection area between the light waveguide (3) and each end of the optical fibers (6, 7).

14. Device for telecommunication, laser-technology, medical-applications and/or spectroscopy using at least one etalon (1) according to at least one of the claims 10 to 12 and/or a resonator (11) according to claim 13.
